Europäisches Patentamt

European Patent Office

Office européen des brevets

(19)

(11) Veröffentlichungsnummer: **0 280 137 B1**

# EUROPÄISCHE PATENTSCHRIFT

(12)

(45) Veröffentlichungstag der Patentschrift: **18.09.91**

(51) Int. Cl.5: **G05D 1/03**, E05F 15/20

(21) Anmeldenummer: **88102153.9**

(22) Anmeldetag: **13.02.88**

(54) **Sicherheitsvorrichtung für System mit fahrerlosen Fahrzeugen.**

(30) Priorität: **27.02.87 CH 757/87**

(43) Veröffentlichungstag der Anmeldung:
**31.08.88 Patentblatt 88/35**

(45) Bekanntmachung des Hinweises auf die
Patenterteilung:
**18.09.91 Patentblatt 91/38**

(84) Benannte Vertragsstaaten:
**DE FR GB IT SE**

(56) Entgegenhaltungen:
**DE-A- 3 501 598**
**GB-A- 2 028 647**

**PATENT ABSTRACTS OF JAPAN, Band 7, Nr.**
**51 (P-179)[1196], 26. Februar 1983; & JP-A-57**
**197 619 (TOKYO SHIBAURA DENKI K.K.)**
**03-12-1982**

(73) Patentinhaber: **JD-Technologie AG**
**c/o Gestinor Services AG Chamerstrasse 50**
**CH-6300 Zug(CH)**

(72) Erfinder: **Hafner, Rudolf**
**Ob. Kanalweg 20**
**CH-2560 Nidau(CH)**

(74) Vertreter: **Blum, Rudolf Emil Ernst et al**
**c/o E. Blum & Co Patentanwälte Vorderberg**
**11**
**CH-8044 Zürich(CH)**

## Beschreibung

Die Erfindung bezieht sich auf eine Sicherheitsvorrichtung für fahrerlose Fahrzeuge oder mit diesen zusammenwirkende ortsfeste Bauten, wobei der zu sichernde Gefahrenbereich mit einer Lichtschrankenanordnung versehen ist.

Lichtschrankenanordnungen zur Detektion von Objekten sind schon in vielfacher Ausführung bekannt geworden. Dabei wird einerseits durch das Unterbrechen einer Sichtschranke die Anwesenheit irgend eines Objektes festgestellt. Andererseits gibt es aber auch spezielle Lichtschrankenanordnungen, welche nur auf bestimmte Objekte reagieren. In der GB-A-2 028 647 ist z.B. eine solche Anlage beschrieben, bei welcher Sender und Empfänger auf derselben Seite der Schranke angeordnet sind. An Fahrzeugen sind an bestimmten Stellen Reflektoren angeordnet, welche das Senderlicht in den Empfänger zurückreflektieren, womit die Anwesenheit des Fahrzeuges detektiert wird, um weitere Vorgänge auszu-lösen. Hiermit lässt sich aber nur die Präsenz der besonders ausgerüsteten Fahrzeuge feststellen, alle anderen Objekte werden nicht detektiert, womit sich keine Sicherung gegen das Eindringen von beliebigen Objekten in einen Gefahrenbereich erzielen lässt.

Die geltenden Sicherheitsvorschriften für fahrerlose Fahrzeuge schreiben vor, dass diese in Fahrtrichtung mit einer mindestens die Fahrzeugbreite deckenden Auffahrsicherung ausgerüstet sein müssen, welche einen bestimmten Bereich über dem Fussboden abschirmt und beim Auffahren auf ein Hindernis eine Notbremsung bewirkt.

Bekannte Auffahrsicherungen bestehen in der Regel aus mechanischen Vorrichtungen (Schutzbügel, Bumper), welche an den Aussenseiten des Fahrzeugs installiert sind und auf physischen Kontakt mit Hindernissen reagieren. In automatischen Fördersystemen kommt es nun oft vor, dass ein Transportfahrzeug, z.B. zwecks Lastübergabe, eine ortsfeste mechanische Trägerstruktur (Lastbock) unterfahren muss. Die Auskragung dieses Lastbocks ist nicht in allen Fällen so realisierbar, dass darunter genügend Platz für die Sicherheitsvorrichtung des Fahrzeugs frei bleibt, so dass diese mit den am Boden befestigten Stützen kollidiert und ein Andocken des Fahrzeuges verunmöglicht wird.

In solchen Fällen, in denen also aus arbeits- oder funktionstechnischen Gründen der Einsatz der Sicherheitsvorrichtung unmöglich ist, muss der Bereich für diese Fahrzeugbewegungen durch andere Massnahmen gesichert werden, was in der Rgel ein Sperren der Lastübergabezone für den übrigen Verkehr, namentlich für Personen, bedeutet.

Dies widerspricht aber in manchen Anwendungsbereichen dem Systemzweck, der, wie beispielsweise im Falle der sogenannten flexiblen Montage, gerade in der engen Kopplung zwischen manueller Montage und automatischem Transport besteht.

Im weiteren müssen in automatisierten Förderungssystemen die von fahrerlosen Fahrzeugen benutzten Strassen in gewissen Bereichen mit einem Zutrittsschutz versehen werden, welcher bewirkt, dass der Verkehr angehalten wird, wenn eine Person diesen Bereich betritt.

Bekannte Sicherheitsvorrichtungen dieser Art bestehen beispielsweise aus hintereinander angeordneten Lichtschranken, wobei die Distanz zwischen der ersten und der letzten so gewählt wird, dass zutrittsberechtigte Fahrzeuge sämtliche Lichtschranken gleichzeitig abzudecken vermögen, während Personen dadurch erkannt werden, dass sie nur eine beschränkte Anzahl dieser Lichtschranken unterbrechen.

Ein solcher Zutrittsschutz ist jedoch nicht in der Lage, eine neben einem zutrittsberechtigten Fahrzeug schreitende Person zu detektieren. Ebenso besteht die Gefahr, dass eine Person, welche einen der Fahrzeuglänge entsprechenden Gegenstand (Brett, Blech etc.) mit sich trägt, den zu sichernden Bereich unerkannt betritt.

Die Erfindung gemäss Anspruch 1 bietet in beiden Fällen eine Lösung, indem sie eine Sicherheitsvorrichtung vorschlägt, bei der die Lichtschrankenanordnung mindestens zwei gegenläufig wirkende ReflexionsLichtschranken aufweist und Objekte, deren Eintritt in den Gefahrenbereich erlaubt ist, beidseitig mit Reflektoren versehen sind, so dass sie durch die Reflexions-Lichtschranken nicht detektiert werden können.

In beiden Fällen werden Objekte, welche keine solchen Reflektoren tragen ("unerlaubte Objekte"), von den Lichtschranken dadurch erkannt, dass der/die Empfänger kein reflektiertes Licht mehr detektieren.

Die wesentlichen Vorteile der Erfindung sind darin zu sehen, dass die vorgeschlagene Sicherheitsvorrichtung zwischen erlaubten und unerlaubten Objekten zu unterscheiden vermag, wodurch sowohl die oben erwähnten Probleme im Bereich der Kopplung zwischen manueller Montage und automatischem Transport gelöst werden, als auch ein zuverlässiger Zutrittsschutz ermöglicht wird.

Mit der doppelten Ausführung der Reflexions-Lichtschranken und ihrer gegenläufigen Anordnung wird erreicht, dass unerlaubte Objekte, welche sich für die eine Lichtschranke im Schatten eines erlaubten Objektes befinden, durch die andere Lichtschranke detektiert werden.

Die doppelte Lichtschrankenausrüstung ergibt im weiteren eine im Hinblick auf das Systemausfallrisiko willkommene Redundanz.

Die Reflektoren sind zudem mit geringem Aufwand anzubringen bzw. zu entfernen, was eine hohe Flexibilität des Systems zur Folge hat.

Im folgenden soll die Erfindung anhand von Zeichnungen erläutert werden. Dabei zeigen

Fig. 1 in perspektivischer Darstellung die prinzipielle Anordnung der Lichtschranken;

Fig. 2 in perspektivischer Darstellung ein mögliches Ausführungsbeispiel einer solchen Sicherheitsvorrichtung bei einem Fahrzeug;

Fig. 3 in Draufsicht die Funktionsweise der Sicherheitsvorrichtung bei erlaubten und unerlaubten Objekten; und

Fig. 4 in Draufsicht einen Zutrittsschutz bei einer Gefahrenzone.

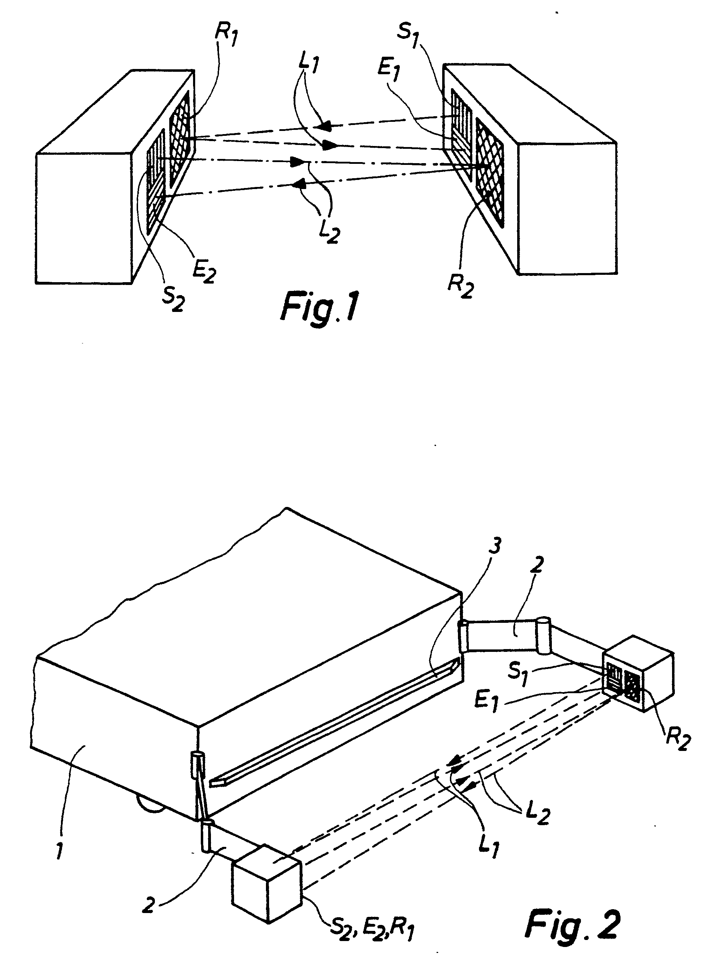

Fig. 1 zeigt die gegenläufige Anordnung zweier Reflexions-Lichtschranken, deren jede aus einem Sender $S_1$, $S_2$, einem Empfänger $E_1$, $E_2$ sowie einem gegenüberliegenden Reflektor $R_1$, $R_2$ besteht, welcher die vom jeweiligen Sender $S_1$, $S_2$ emittierten Strahlen $L_1$, $L_2$ den zugehörigen Empfänger $E_1$, $E_2$ zurückwirft.

Um sicherzustellen, dass sich die Lichtschranken nicht gegenseitig blenden und dadurch unwirksam machen, wird vor beiden je ein Paar von Polarisationsfiltern so angeordnet, dass die Polarisationsachsen der Sender- und Empfängerfilter senkrecht aufeinanderstehen.

Zusätzlich wird durch diese Anordnung der Polarisationsfilter erreicht, dass die Lichtschranken nur noch mit sogenannten Tripelreflektoren funktionieren. Das heisst, für die Reflektoren $R_1$, $R_2$ werden spezielle Folienstreifen verwendet, deren innere Struktur aus Tripelprismen in Submillimetergrösse bestehe (z.B. Reflektor Nr. 4.096 03 der Firma Visolux, Berlin).

Dadurch werden auch metallisch glänzende Objekte zuverlässig als unerlaubte Objekte erkannt.

Fig. 2 zeigt einen möglichen Aufbau einer Auffahrsicherung bei einem fahrerlosen Fahrzeug 1.

Die beiden Reflexions-Lichtschranken, die denjenigen von Fig. 1 entsprechen, sind mittels zweier Arme 2 am Fahrzeug 1 befestigt. Die Arme 2 sind gelenkig gelagert und schwenken bei Berührung aus, so dass mindestens ein Sender-Empfänger seinen gegenüberliegenden Reflektor aus dem Erfassungsbereich verliert und eine Notbremsung auslöst.

Dasselbe geschieht, sobald ein unerlaubtes Objekt mindestens einen der Lichtstrahlen $L_1$, $L_2$ unterbricht. Für den Fall, dass sich ein Hindernis bereits zwischen den Lichtstrahlen $L_1$, $L_2$ und dem Fahrzeug 1 befindet, wenn dieses losfährt, ist eine deformierbare Sicherheitsleiste 3 vorgesehen, welche bei Berührung die Fahrzeugbewegung stoppt. Während der Anfahrphase muss die Fahrgeschwindigkeit deshalb so gering bleiben, dass der Deformationsweg der Sicherheitsleiste 3 ausreicht, um das Fahrzeug anzuhalten.

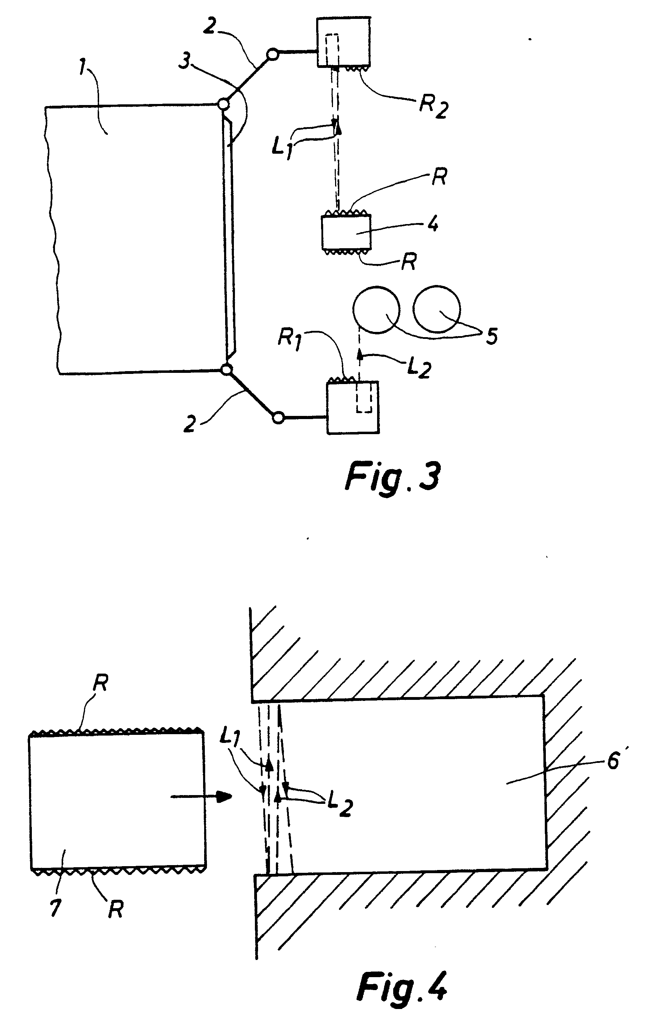

Fig. 3 zeigt am Beispiel eines Fahrzeuges 1 (entsprechend Fig. 2) die Funktionsweise der Sicherheitsvorrichtung bei einem erlaubten Objekt 4 und einem unerlaubten Objekt 5. Das erlaubte Objekt 4 (z.B. eine Stütze eines zu unterfahrenden Lastbocks) ist erfindungsgemäss beidseitig mit Tripelreflektoren R versehen. Der Lichtstrahl $L_1$ des Senders $S_1$ wird anstatt vom Reflektor $R_1$ vom Reflektor R auf den Empfänger $E_1$ zurückgeworden. Dasselbe gilt - bei Fehlen des unerlaubten Objektes 5-für die zweite Lichtschranke ($S_2$-R-$E_2$). Das Objekt 4 wird nicht detektiert.

Die dargestellte Situation zeigt nun aber ein unerlaubtes Objekt 5 (z.B. ein Mensch), das von der zweiten Lichtschranke dadurch detektiert wird, dass der vom Sender $S_2$ ausgehende Lichtstrahl $L_2$ vom Objekt 5 in Ermangelung entsprechender Reflektoren nicht auf dem Empfänger $E_2$ zurückgeworden wird, was zu einer Notbremsung führt.

In Fig. 4 sind die beiden Reflexions-Lichtschranken als Zutrittsschutz ausgebildet, d.h. ortsfest so installiert, dass sie einen Eingang zu einer Gefahrenzone 6 (z.B. eine Lastübergabezone) in geeigneter Höhe (z.B. 50 cm über dem Fussboden) überwachen.

Personen, welche diese Zone betreten, unterbrechen die Strahlen $L_1$, $L_2$ mindestens kurzfristig, wodurch ein Alarm ausgelöst bzw. die Zone für sämtliche Fahrzeuge gesperrt wird, bis die Person sie verlassen hat.

Zutrittsberechtigte Fahrzeuge 7 sind beidseitig mit Reflektoren R versehen, wodurch die Strahlen $L_1$, $L_2$ auf die Empfänger $E_1$, $E_2$ zurückgeworfen werden.

Damit ist ein solches Fahrzeug für die Sicherheitsvorrichtung "unsichtbar".

## Patentansprüche

1. Sicherheitsvorrichtung für die Sicherung bestimmter Bereiche in einer Anlage mit fahrerlosen Transportfahrzeugen gegen das Eindringen von nicht zugelassenen Objekten, wobei jeder zu sichernde Bereich eine Eintrittszone mit einer linksseitigen und einer rechtsseitigen Begrenzung besitzt, zwischen denen eine Lichtschrankenanordnung vorgesehen ist, dadurch gekennzeichnet, dass die Lichtschrankenanordnung eine erste, von der linksseitigen Begrenzung aus wirkende sowie eine zweite, von der rechtsseitigen Begrenzung aus wirkende Reflexionslichtschranke ($S_1$, $R_1$, $E_1$; $S_2$, $R_2$, $E_2$) besitzt, wobei jede der Reflexionslichtschranken bei der entsprechenden Begrenzung einen Sender ($S_1$; $S_2$) und einen Empfänger ($E_1$; $E_2$), sowie bei der gegenüberliegenden Begrenzung einen Reflektor ($R_1$; $R_2$) besitzt, und dass Objekte (4; 7), denen das Eindringen in den zu sichernden Bereich gestattet ist, an ihren beim Durchtritt durch die Eintrittszone den Begrenzungen der Eintrittszone zugewandten Seiten mit Reflektoren (R) versehen sind, welche das von den Sendern ausgesandte Licht in den zugehörigen Empfänger reflektieren, so dass die Lichtschranken nicht unterbrochen werden.

2. Sicherheitsvorrichtung nach Anspruch 1, dadurch gekennzeichnet, dass die Reflexions-Lichtschranken mit je einem Paar von Polarisationsfiltern versehen sind, und dass die Polarisationsachsen der Sender- und Empfängerfilter senkrecht aufeinander stehen.

3. Sicherheitsvorrichtung nach einem der vorangehenden Ansprüche, dadurch gekennzeichnet, dass zur Reflexion Tripelreflektoren verwendet werden.

4. Sicherheitsvorrichtung nach einem der vorangehenden Ansprüche, dadurch gekennzeichnet, dass die gegenläufigen Reflexions-Lichtschranken am Fahrzeug (1) befestigt sind, während die Reflektoren (R) an ortsfesten Hindernissen (4), die keine Notbremsung auslösen sollen, angebracht sind.

5. Sicherheitsvorrichtung nach Anspruch 4, dadurch gekennzeichnet, dass die Reflexions-Lichtschranken mittels gelenkig gelagerter und bei Berührung ausschwenkender Arme (2) am Fahrzeug (1) befestigt sind.

6. Sicherheitsvorrichtung nach Anspruch 4 oder 5, dadurch gekennzeichnet, dass am Fahrzeug zusätzlich eine deformierbare Sicherheitsleiste (3) vorgesehen ist, die bei Berührung eine Notbremsung auslöst.

7. Sicherheitsvorrichtung nach Anspruch 1, 2 oder 3 als Zutrittsschutz für von fahrerlosen Fahrzeugen benutzte Zonen (6), dadurch gekennzeichnet, dass die gegenläufigen Reflexions-Lichtschranken ortsfest installiert sind, während die Reflektoren (R) an zutrittsberechtigten Fahrzeugen (7) angebracht sind.

## Claims

1. Security device for securing defined areas in a system employing driverless conveying vehicles against the entrance of non admitted objects, wherein each area to be secured comprises an entrance zone with a left and a right boundary, between which a light barrier arrangement is provided, characterized in that the light barrier arrangement comprises a first reflection light barrier acting from the left boundary and a second reflection light barrier acting from the right boundary ($S_1$, $R_1$, $E_1$; $S_2$, $R_2$, $E_2$), wherein each of the reflection light barriers has an emitter ($S_1$; $S_2$) and a receiver ($E_1$, $E_2$) placed at the respective boundary and further has a reflector ($R_1$; $R_2$) placed at the respective opposite boundary, and in that objects (4; 7) which are admitted to enter the area to be secured are provided with reflectors (R) at their sides facing said boundaries, which reflectors (R) reflect the light emitted by the emitters back into the corresponding receivers, so that the light barriers are not interrupted.

2. Security device of claims 1, characterized in that each of the reflection light barriers is provided with a pair of polarization filters and in that the axes of polarization of the filters at the emitters and at the receivers are disposed vertically to each other.

3. Security device of one of the preceding claims, characterized in that triple-reflectors are used for reflection.

4. Security device of one of the preceding claims, characterized in that the opposite reflection light barriers are mounted at the vehicle (1), whereas the reflectors (R) are arranged at fixed obstacles (4), which are not to trigger an emergency stop.

5. Security device of claim 4, characterized in that the reflection light barriers are mounted to the vehicle (1) by means of articulated arms (2) which in case of contact are swivelled.

6. Security device of claim 4 or 5, characterized in that the vehicle additionally comprises a deformable security ledge (3) operative for triggering an emergency stop in case of contact.

7. Security device of claim 1, 2 or 3 provided as a protection against the access to areas (6) used by driverless vehicles, characterized in that the opposite reflection light barriers are fixedly mounted, wherein the reflectors (R) are arranged at the vehicles (7) admitted to enter said areas.

## Revendications

1. Dispositif de sécurité pour la sécurité de zones définies dans une installation avec véhicules sans chauffeur contre l'introduction d'objets non autorisés, chaque zone à protéger comportant une zone d'entrée avec une limite gauche et une limite droite entre lesquelles est prévu un appareil de barrage photoélectrique, caractérisé en ce que l'appareil de barrage photoélectrique comporte un premier barrage photoélectrique à réflexion fonctionnant à la limite gauche ainsi qu'un second barrage photoélectrique à réflexion fonctionnant à la limite droite $(S_1, R_1, E_1; S_2, R_2, E_2)$, chacun des barrages photoélectriques comportant un émetteur $(S_1; S_2)$ et un récepteur $(E_1; E_2)$ à la limite correspondante ainsi qu'un réflecteur $(R_1; R_2)$ à la limite opposée, et en ce que les objets, dont l'entrée est autorisée dans la zone à protéger, sont munis de réflecteurs (R) sur leurs côtés tournés vers les limites de la zone d'entrée dans le passage à travers la zone d'entrée, qui réfléchissent la lumière émise par les émetteurs dans les récepteurs correspondants, de manière que les barrages photoélectriques ne soient pas interrompus.

2. Dispositif de sécurité selon la revendication 1, caractérisé en ce que les barrages photoélectriques à réflexion sont munis chacun d'une paire de filtres polarisateurs et en ce que les axes de polarisation des filtres d'émission et de réception sont verticalement l'un au-dessus de l'autre.

3. Dispositif de sécurité selon l'une des revendications précédentes, caractérisé en ce que, pour la réflexion, on utilise des réflecteurs en trièdre.

4. Dispositif de sécurité selon l'une des revendications précédentes, caractérisé en ce que les barrages photoélectriques à réflexion fonctionnant dans des sens opposés, sont fixés au véhicule (1), alors que les réflecteurs (R) sont appliqués aux obstacles fixes (4) qui ne doivent pas déclencher de signal d'alarme.

5. Dispositif de sécurité selon la revendication 4, caractérisé en ce que les barrages photoélectriques à réflexion sont fixés au véhicule (1) au moyen de bras (2) montés articulés et pivotant au contact.

6. Dispositif de sécurité selon la revendication 4 ou 5, caractérisé en ce que, en plus sur le véhicule, est prévu une barre de sécurité déformable (3) qui, à son contact, déclenche un signal d'alarme.

7. Dispositif de sécurité selon la revendication 1, 2 ou 3 sous forme d'une protection d'entrée (6) pour zones utilisées par des véhicules sans chauffeur, caractérisé en ce que des barrages photoélectriques à réflexion fonctionnant dans des sens opposés sont installés fixes, alors que les réflecteurs (R) sont appliqués aux véhicules autorisés à entrer.

Fig.1

Fig. 2

**Fig. 3**

**Fig.4**

7